# EUROPEAN PATENT APPLICATION

(11) **EP 3 312 019 A1**
(43) Date of publication of application: **25.04.2018**
(21) Application number: 16827508.9
(22) Date of filing: 01.06.2016
(51) Int. Cl.: B43L 13/00, G06F 3/13, B26D 5/00, B26D 7/26

(54) **PEN CARTRIDGE**

(30) Priority: 22.07.2015 JP 2015144874
(71) Applicant: Brother Kogyo Kabushiki Kaisha, Nagoya-shi, Aichi 467-8561 (JP)
(72) Inventor: DOMEN, Mitsuo, Nagoya-shi Aichi 467-8561 (JP); KAWAMOTO, Naoki, Nagoya-shi Aichi 467-8561 (JP)
(74) Representative: Prüfer & Partner mbB Patentanwälte · Rechtsanwälte
(86) International application number: PCT/JP2016/066162
(87) International publication number: WO 2017/013944

(57) **Abstract**

A pen cartridge that holds a pen, configured to be detachably attached to a plotter configured to perform drawing using the pen includes: a housing comprising a cylindrical hollow part into which the pen is inserted; an operation member provided on the housing; the operation member configured to rotate between a first position and a second position around a central axis with respect to the housing; the central axis extends in the direction in which the pen is inserted; and a grasping member provided in the housing and including a plurality of grasping parts configured to grasp an outer circumference of the pen inserted into the housing at a plurality of different locations in an axial direction which is a direction in which the central axis extends, the plurality of grasping parts configured to transition from a released state to a grasping state when the operation member is rotated from the first position to the second position, the released state being a state in which the pen is not grasped, and the grasping state being a state in which the pen is grasped.

## Description

### FIELD

The present disclosure relates to a pen cartridge that holds a pen, configured to be detachably attached to a plotter configured to perform drawing using the pen.

### BACKGROUND

Conventionally, cutting plotters for cutting a sheet-like object such as paper into a desired shape are publicly known(see Patent Literature 1 : Japanese Patent Laid-Open No.H10-119484 A). Such a cutting plotter is provided with a cutter cartridge to cut an object and a carriage to which the cutter cartridge can be attached. A pen cartridge with a built-in pen can also be attached to this carriage instead of the cutter cartridge. With the pen cartridge attached to the carriage, the cutting plotter can draw a desired pattern or design on a surface of the object.

The conventional pen cartridge which disclosed at Patent Literature 1 is constructed of a cylindrical pen holder which includes four clamping pieces on a rear end side, a cap attached on a distal end side of the pen holder to perform alignment of the distal end of the pen, and a squeezer screwed to a rear end side of the pen holder to cause the clamping pieces to elastically deform toward an inner circumferential side. In this pen cartridge, with the cap attached to the pen holder, the pen is inserted into the pen holder until the pen hits a blocking plate of the cap. Next, the squeezer is fastened to the pen holder until the pen is sufficiently fixed, the cap is then removed and the pen holder is thereby attached to the carriage.

### SUMMARY

However, since the conventional pen cartridge is configured to clamp the pen by the clamping pieces at one middle part of a pen shaft, it has a disadvantage of being unable to stably hold the pen.

The present disclosure has been implemented in view of the above-described circumferences, and it is an object of the present disclosure to provide a pen cartridge configured to be detachably attached to a plotter while holding a pen and capable of stably holding the pen.

In order to attain the above-described object, a pen cartridge according to the present disclosure is a pen cartridge that holds a pen, configured to be detachably attached to a plotter configured to perform drawing using the pen includes: a housing comprising a cylindrical hollow part into which the pen is inserted; an operation member provided on the housing; the operation member configured to rotate between a first position and a second position around a central axis with respect to the housing; the central axis extends in the direction in which the pen is inserted; and a grasping member provided in the housing and including a plurality of grasping parts configured to grasp an outer circumference of the pen inserted into the housing at a plurality of different locations in an axial direction which is a direction in which the central axis extends, the plurality of grasping parts configured to transition from a released state to a grasping state when the operation member is rotated from the first position to the second position, the released state being a state in which the pen is not grasped, and the grasping state being a state in which the pen is grasped.

According to the pen cartridge of the present disclosure, by inserting the pen into the cylindrical hollow part of the housing in a penetrating state and causing the operation member to rotate from the first position to the second position, it is possible to cause a plurality of grasping member to transition from a released state to a grasping state. Then the outer circumference of the pen is grasped by these grasping parts at a plurality of locations in the axial direction. Therefore, it is possible to stably hold the pen using the pen cartridge detachably attached to the cutting plotter while holding the pen.

### BRIEF DESCRIPTION OF DRAWINGS

Aspects of the disclosure are illustrated by way of example, and not by limitation, in the accompanying figures in which like reference characters may indicate similar elements.
FIG. 1 illustrates an embodiment of the present disclosure and is a perspective view schematically illustrating an overall configuration of a cutting plotter;
FIG. 2 is a perspective view of a carriage part;
FIG. 3A is a front view illustrating a pen cartridge;
FIG. 3B is a top view illustrating the pen cartridge;
FIG. 4 is a longitudinal cross-sectional view along a line IV-IV in FIG. 3B of the pen cartridge;
FIG. 5 is an exploded perspective view of the pen cartridge;
FIG. 6 is a lateral cross-sectional plan view along a line VI-VI in FIG. 3A of a cam part;
FIG. 7A is a front view illustrating a grasping member before deformation;
FIG. 7B is a top view illustrating the grasping member before deformation;
FIG. 8A is a front view illustrating the deformed grasping member;
FIG. 8B is a top view illustrating the deformed grasping member;
FIG. 9A is a perspective view of a transmission member;
FIG. 9B is a bottom view of the transmission member;
FIG. 10 is a side view of an operation member;
FIG. 11 is a longitudinal cross-sectional view of the operation member;
FIG. 12 is a perspective view of a positioning jig;
FIG. 13 is a perspective view illustrating the pen cartridge attached to the positioning jig; and
FIG. 14 is a front view illustrating the pen held by the pen cartridge.

### DETAILED DESCRIPTION

For a more complete understanding of the present disclosure, needs satisfied thereby, and the objects, features, and advantages thereof, reference now is made to the following descriptions taken in connection with the accompanying drawings. Hereinafter, illustrative embodiments will be described with reference to the accompanying drawings.

Hereinafter, an embodiment that embodies the present disclosure will be described with reference to the accompanying drawings. Note that in the present embodiment, the present disclosure is applied to a pen cartridge attached to a cutting plotter. This cutting plotter is an apparatus configured to cut an object such as paper according to cutting data with a cutter cartridge attached to the cutting plotter. Furthermore, when a pen cartridge according to the present embodiment, instead of the cutter cartridge, is attached to the cutting plotter, it is possible to perform drawing using a pen on a surface of the object according to the drawing data.

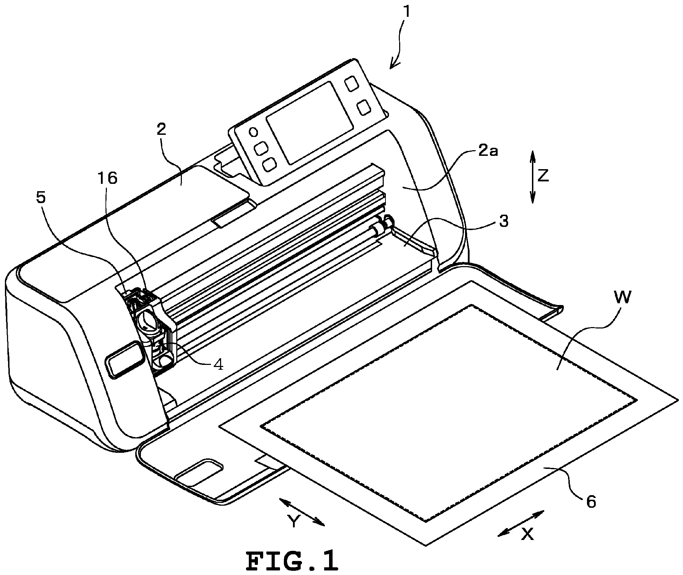

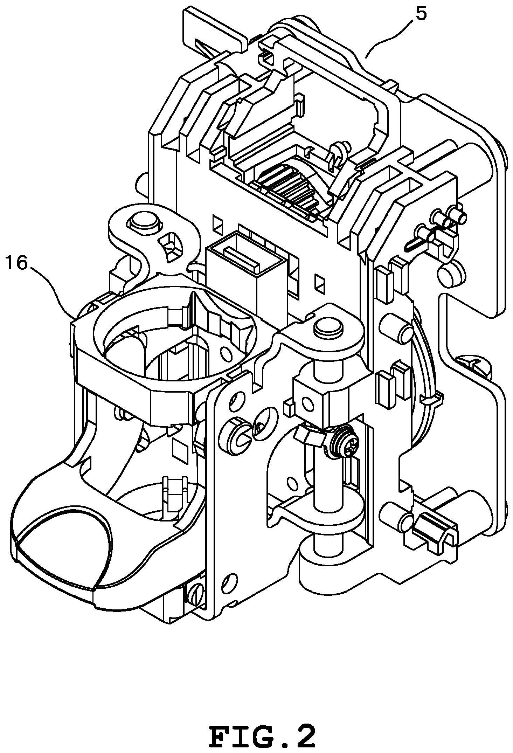

FIG. 1 illustrates an external configuration of a cutting plotter 1 as a plotter. FIG. 2 schematically illustrates a configuration of a carriage 5 provided in the cutting plotter 1. A schematic configuration of the cutting plotter 1 will be described first. As shown in FIG. 1, the cutting plotter 1 is provided with a body cover 2, a platen 3 disposed in the body cover 2 and a carriage 5 to which a cutter cartridge 4 is detachably attached. The cutting plotter 1 is provided with a holding member 6 for holding a sheet-like object W such as paper and cloth.

The body cover 2 has a laterally long rectangular box shape and a front opening 2a which is a laterally long opening is formed on a front thereof. The holding member 6 is inserted into the cutting plotter 1 from the front and set on a top surface of the platen 3. The holding member 6 set on the top surface of the platen 3 is transferred in a front-back direction (Y-direction).

A transfer mechanism is provided in the body cover 2 to transfer the holding member 6 in the front-back direction (Y-direction) on the top surface of the platen 3. Furthermore, a carriage moving mechanism is provided in the body cover 2 to move the carriage 5 in a left-right direction (X-direction). Here, directions in the present embodiment will be defined. A transfer direction of the holding member 6 by the transfer mechanism is assumed to be the front-back direction (Y-direction). A moving direction of the carriage 5 by the carriage moving mechanism is assumed to be the left-right direction (X-direction). A direction orthogonal to the front-back direction and the left-right direction is assumed to be a vertical direction (Z-direction).

As shown in FIG. 2, the carriage 5 is provided with a cartridge holder 16 and a vertical drive mechanism (not shown) configured to drive the cartridge holder 16 in the vertical direction. The cartridge holder 16 detachably holds cartridges 4 and 21. When a cutting operation is performed on the object W, the cutter cartridge 4 is attached to the cartridge holder 16. Although not shown in detail, the cutter cartridge 4 is provided with a cylindrical case extending in the vertical direction and a cutter extending along its central axis. The cutter protrudes downward by a predetermined length from a bottom end part of the case and a blade is formed at its bottom end.

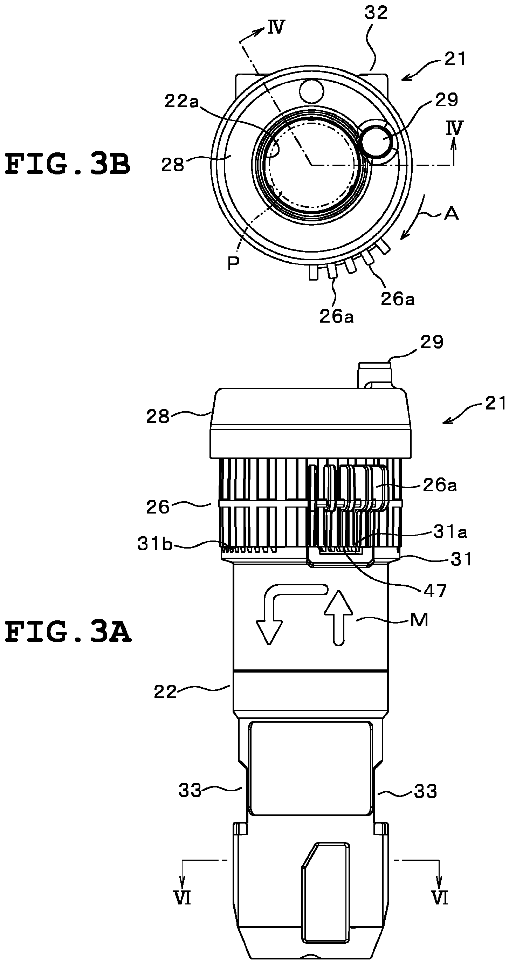

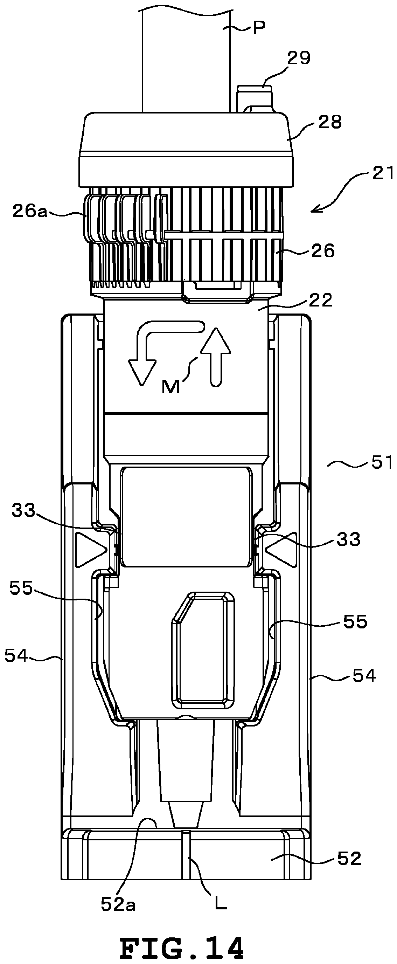

Furthermore, when a drawing operation is performed on the object W, a pen cartridge 21 according to the present embodiment is attached to the cartridge holder 16. The pen cartridge 21 is intended to hold a pen P (see FIG. 14 and FIG. 3B), and details thereof will be described later. A commercially available felt pen or a ball-point pen or the like may be adopted as the pen P. As is generally known, the pen P is configured by including a pen point at a distal end part of a round bar-like penholder.

The vertical drive mechanism is provided with a Z-axis motor (not shown) or the like and configured so as to move the cartridge holder 16 between a descending position where a cutting or drawing operation is performed and an ascending position where the cartridge holder 16 is retracted upward from the object W and no operation is performed. When the cutter cartridge 4 is attached, the blade of the cutter penetrates the object W held by the holding member 6 in a thickness direction at the descending position of the cartridge holder 16. The transfer mechanism moves the object W held by the holding member 6 in the front-back direction and the carriage moving mechanism moves the carriage 5, that is, the cutter in the left-right direction, and a cutting operation is thereby performed on the object W.

When the pen cartridge 21 is attached, the distal end of the pen P is enabled to perform drawing in contact with the top surface of the object W at the descending position of the cartridge holder 16. Regarding a drawing operation, the transfer mechanism moves the object W held by the holding member 6 in the front-back direction and the carriage moving mechanism moves the carriage 5, that is, the pen cartridge 21 in the left-right direction.

Although not shown, the cutting plotter 1 is provided with a control apparatus mainly constructed of a computer (CPU) for controlling the entire cutting plotter 1. The control apparatus performs a cutting operation or drawing operation according to an operation control program or the like and based on cutting data or drawing data. Note that, the control apparatus can recognize whether the cartridge attached to the cartridge holder 16 is the cutter cartridge 4 or the pen cartridge 21 based on detection by a sensor.

The configuration of the pen cartridge 21 according to the present embodiment will be described with reference to FIG. 3 to FIG. 14. As shown in FIG. 3 to FIG. 5, the pen cartridge 21 is constructed of a housing 22, a grasping member 23, a transmission member 24, a coil spring 25, an operation member 26, a wave spring 27, a cap 28 and a rivet 29. When the orientation is referred to in the following description, the orientation will be described based on the vertical direction, the front-back direction and the left-right direction when the pen cartridge 21 is attached to the cartridge holder 16, that is, when the pen P is placed facedown in the vertical direction and used.

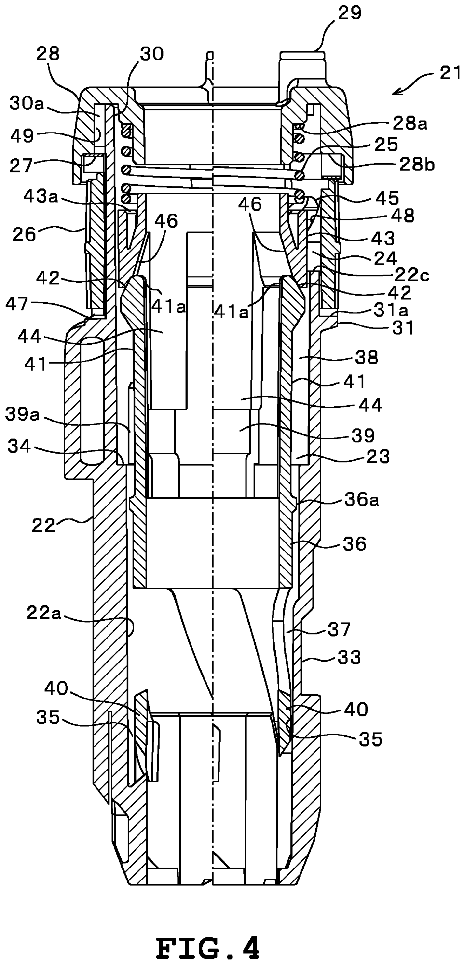

The housing 22 is made of a rigid plastic material such as ABS resin and formed into a vertically long and substantially cylindrical shape as a whole. As shown in FIG. 4 or the like, this housing 22 includes a cylindrical hollow part 22a into which the pen P is vertically inserted in a penetrating manner. Hereinafter, the direction in which a central axis of the cylindrical hollow part 22a extends will be referred to as an "axial direction" and the direction crossing the axial direction will be referred to as a "diameter direction." More specifically, the housing 22 has the following configuration.

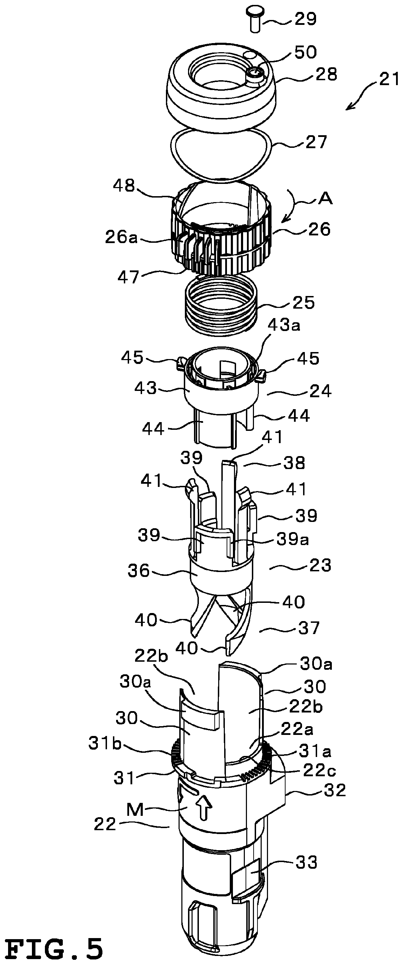

As shown in FIG. 5, the top end part of the housing 22 has a cylindrical peripheral wall, left and right parts of which are left open, while front and rear parts of which are left as they are, both of which integrally constitute arcuate walls 30 and 30 at the front and rear parts. Spaces between the arcuate walls 30 and 30 constitute side openings 22b and 22b. As is partially shown in FIG. 4, male thread parts 30a and 30a are integrally formed into which the cap 28, which will be described later, is screwed on the outer circumferential surfaces of the top end parts of the respective arcuate walls 30 and 30.

A flange part 31 is integrally provided on an outer circumferential surface of the housing 22 located below the arcuate walls 30 and 30 to receive a bottom end part of the operation member 26, which will be described later, so as to protrude in an outer circumferential direction. As shown in FIG. 4 and FIG. 5, a first ratchet part 31a and a second ratchet part 31b in which a plurality of grooves are formed, arranged side by side in the circumferential direction are provided on the top surface of the flange part 31 located close to the right and close to the left. As will be described later, the second ratchet part 31b on the left side forms a part of an engagement mechanism for holding the operation member 26 at a second position.

As shown in FIG. 5, a convex part 32, whose rearward protruding rear surface is made into a flat surface is integrally provided on the outer circumferential surface of the housing 22 at an intermediate part in the vertical direction, that is, below the flange part 31. Furthermore, as also shown in FIG. 3A and FIG. 14, a constricted part 33 is provided on the outer circumferential surface of the housing 22 located in a region close to the lower part to make the housing 22 narrower in the left-right direction. When the pen cartridge 21 is attached to the cartridge holder 16 or a positioning jig, which will be described later, the convex part 32 is used for positioning in the front-back direction and the constricted part 33 is used for positioning and holding in the vertical direction and the left-right direction.

Note that as shown in FIG. 3A and FIG. 14 or the like, a mark M is formed at the intermediate part in the vertical direction, that is, on the front of the convex part 32 of the outer circumferential surface of the housing 22. The mark M indicates, using an arrow, an operation procedure of the operation member 26, which will be described later, that is, a procedure for lifting up, turning leftward and then lowering the operation member 26.

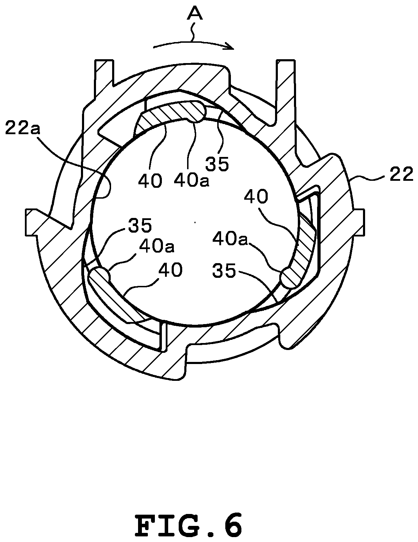

As shown in FIG. 4, a stepped part 34 is formed at an intermediate part in the vertical direction on an inner circumferential surface of the housing 22 such that an inner diameter of its lower part is a little smaller than that of its upper part. This stepped part 34 is provided in such a manner as to lock the grasping member 23, which will be described later, to prevent it from falling downward to position it in the vertical direction. As will be also shown in FIG. 6, a cam surface 35 is formed in a region close to a lower part of the inner circumferential surface of the housing 22. This cam surface 35 is intended to deform an elastic deformation claw of the grasping member 23, which will be described later, and the cam surfaces 35 is formed at three locations in the circumferential direction at equal intervals according to the present embodiment. These cam surfaces 35 are formed such that the depth of the concave part decreases, that is, the inner diameter gradually decreases in a clockwise direction when seen from above (arrow A direction).

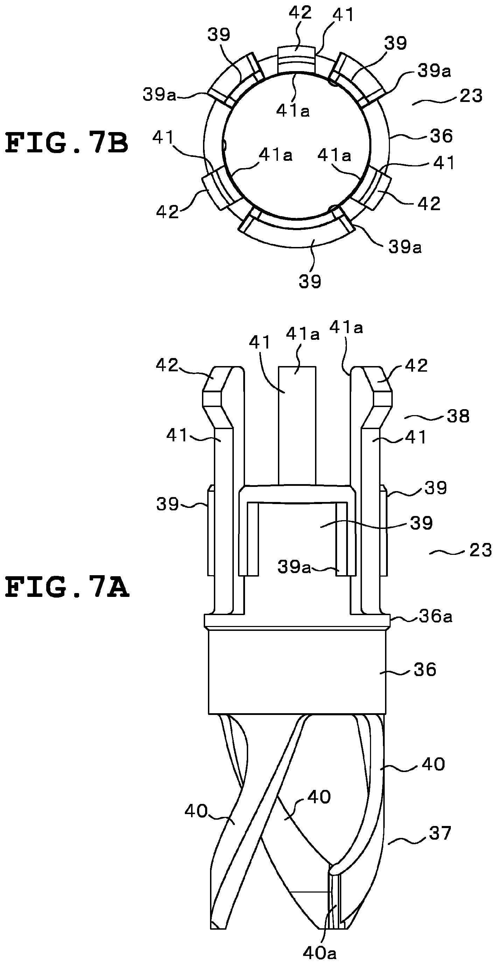

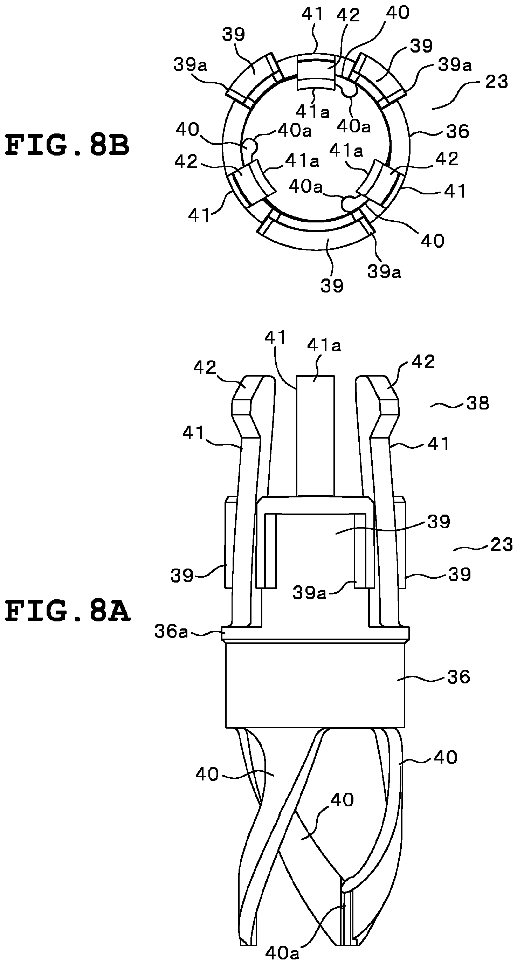

Next, the grasping member 23 will be described. As also shown in FIG. 7 and FIG. 8, the grasping member 23 is made of a relatively soft plastic material such as POM resin and includes a cylindrical part 36, a first grasping part 37 provided below the cylindrical part 36 as a grasping part, a second grasping part 38 provided above the cylindrical part 36 as a grasping part and three engagement piece parts 39 provided above the cylindrical part 36 as an integrated body. The first grasping part 37 is provided on the bottom end side which is one end side in the axial direction of the grasping member 23 and the second grasping part 38 is provided on the top end side which is the other end side. The first grasping part 37 and the second grasping part 38 grasp the pen P at two different positions in the axial direction.

This grasping member 23 is inserted into the cylindrical hollow part 22a of the housing 22 from above. At this time, a rib 39a provided on an outer circumferential surface of the engagement piece part 39 comes into contact with a top surface of the stepped part 34, and the grasping member 23 is accommodated in the housing 22, being prevented from falling downward, that is, being positioned in the vertical direction. The cylindrical part 36 has a cylindrical shape having a diameter at which it is inserted into the cylindrical hollow part 22a and integrally includes, on its outer circumferential surface, a ring-shaped convex part 36a directly below and slidingly contacting with the stepped part 34 of the inner circumferential surface of the housing 22. The grasping member 23 is thereby rotatably accommodated in the housing 22.

The first grasping part 37 provided below the cylindrical part 36 is provided with a plurality of (three in this case) elastic deformation claws 40 to grasp the penholder of the pen P. The three elastic deformation claws 40 are provided at equal intervals, that is, at 120-degree intervals, extend downward in a narrow-width-shape from a bottom end part of the cylindrical part 36, have a spiral shape twisting in a clockwise direction (arrow A direction) toward the bottom when seen from above, and are configured to be elastically deformable in the diameter direction.

The outer circumferential surface of the bottom end part of each elastic deformation claw 40 is disposed within each cam surface 35 as shown in FIG. 6. In this case, when the operation member 26 is located at a first position as will be described later, the grasping member 23 is in a released state as shown in FIG. 7 and the grasping member 23 transitions to a grasping state of grasping the pen P as the operation member 26 is rotated to the second position. When the grasping member 23 is in a released state, the bottom end part of each elastic deformation claw 40 is located at a deep position of each cam surface 35 as shown in FIG. 6 and the bottom end part of each elastic deformation claw 40 is located on the outer circumferential side so as to overlap with the cylindrical part 36 when seen in the axial direction as shown in FIG. 7B.

In contrast, when the grasping member 23 rotates and displaces in the arrow A direction as the operation member 26 rotates, the bottom end part of each elastic deformation claw 40 comes into contact with the cam surface 35, moves in the arrow A direction along its slope, becomes elastically deformed in the inner circumferential direction, and the inner circumferential part of the bottom end of each elastic deformation claw 40 comes into contact with the outer circumferential surface of the penholder of the pen P to grasp the pen P from three directions as shown in FIG. 8. According to the present embodiment, an area of the inner circumferential surface of each elastic deformation claw 40 in contact with the pen P is subjected to so-called emboss processing whereby fine projections and depressions are formed on the surface, thus forming an anti-slip part 40a.

As shown in FIG. 7 and FIG. 8, the second grasping part 38 provided above the cylindrical part 36 is provided with a plurality of (three in this case) elastic pieces 41 to grasp the penholder of the pen P. The three elastic pieces 41 are provided at equal intervals, that is, at 120-degree intervals and extend upward in a narrow-width shape from the top end part of the cylindrical part 36. At this time, a slope 42 is formed on the outer circumferential side of the top end part of each elastic piece 41, integrally provided with a protruding part bulging toward the outer circumferential side with the protruding part facing the outer circumferential side which inclines toward the outer circumferential direction toward the bottom.

As will be described later, when the operation member 26 is at the first position and the grasping member 23 is in the released state, the top end part of each elastic piece 41 is located on the outer circumferential side such that the top end part overlaps the cylindrical part 36 when seen from the axial direction as shown in FIG. 7. In contrast, when the transmission member 24, which will be described later, descends along with a rotation of the operation member 26, the slope 42 is pressed toward the inner circumferential side, the top end part of the elastic piece 41 is elastically deformed in the inner circumferential direction, and the top end inner circumferential part of each elastic piece 41 comes into contact with the outer circumferential surface of the penholder of the pen P, grasping the pen P from three directions as shown in FIG. 8. According to the present embodiment, an area of the inner circumferential surface of each elastic piece 41 in contact with the pen P is also subjected to so-called emboss processing, thus provided with an anti-slip part 41a, as partially shown in FIG. 7 and FIG. 8.

As shown in FIG. 5, FIG. 7B and FIG. 8B, the three engagement piece parts 39 are located at intervals between the respective elastic pieces 41 and extend upward in an arcuate plate shape along the arc of the cylindrical part 36 from the top end part of the cylindrical part 36. At this time, of the three engagement piece parts 39, one engagement piece part 39 located on the front side is configured to be greater than the other two engagement piece parts 39 in the width (length in the inner circumferential direction) in order to facilitate alignment in the rotating direction with the transmission member 24, which will be described later.

As will be described later, these engagement piece parts 39 are configured to engage with the three operation piece parts of the transmission member 24 so as to overlap therewith on the inner circumferential surface side. In such an engagement state, regarding a displacement of the transmission member 24 in the vertical direction, the operation piece part moves sliding in the vertical direction with respect to the engagement piece parts 39, thereby preventing transmission of any force. Regarding the rotating direction of the transmission member 24, a force is transmitted via the engagement piece part 39. Thus, the grasping member 23 is configured to move integrally with the transmission member 24 in the rotating direction.

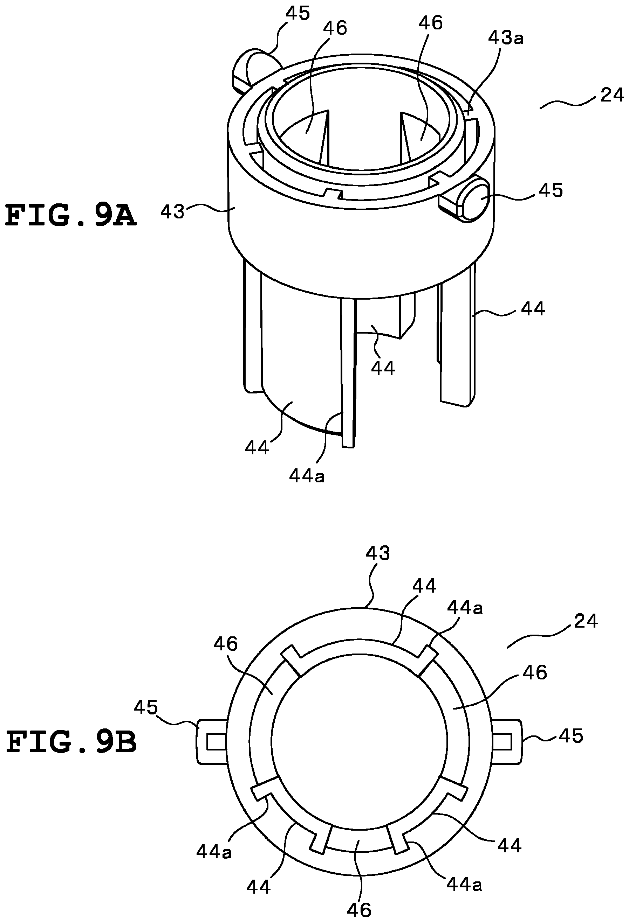

As shown in FIG. 9, the transmission member 24 is formed of a plastic material such as POM resin integrally including a main body 43 which is a relatively thick cylindrical part and three operation piece parts 44 extending downward from the inner circumferential part of the main body 43. A receiving concave part 43a for receiving the bottom end part of the coil spring 25 is formed into a ring shape in the top end face part of the main body 43. Protrusion parts 45 and 45 are integrally provided on the outer circumferential surface of the main body 43 so as to protrude in the diameter direction sideward from the top of both the left and right end parts. As will be described later, these protrusion parts 45 and 45 protrude toward the outer circumferential side by passing through the side openings 22b and 22b of the top end part of the housing 22, and engage with cam parts 48 on the inner circumferential surface of the operation member 26. This causes the transmission member 24 to move in the vertical direction and rotate.

As also shown in FIG. 4, a tapered surface 46 is formed in a lower part of the inner circumferential surface of the main body 43 such that the inner diameter gradually decreases upward from the bottom end part. As shown in FIG. 9B, this tapered surface 46 is formed at three locations where the operation piece part 44 is absent. As will be described later, the tapered surface 46 comes into contact with the slope 42 of the top end part of each elastic piece 41 to play the role of elastically deforming each elastic piece 41 in the inner diameter direction. Note that the transmission member 24 is always biased downward by the coil spring 25, which will be described later, and the protrusion parts 45 are configured to always engage with the cam parts 48.

As shown in FIG. 9, the operation piece part 44 extends downward from the lower part of the inner circumferential surface of the main body 43 and is integrally provided, and located at three locations in the inner circumferential direction in correspondence with the three engagement piece parts 39 of the grasping member 23. These operation piece parts 44 have an arcuate thin plate shape when seen from the top surface and its outer circumferential surface is provided so as to have slide contact with the inner circumferential surface of each engagement piece part 39 so as to move relatively slidably in the vertical direction. Along with this, an engagement wall part 44a that locks both end sides in the circumferential direction of each engagement piece part 39 is integrally provided in both end sides in the circumferential direction of the outer circumferential surface of each operation piece part 44. Thus, each engagement piece part 39 is configured to slide so as not to apply any force of vertical motion of the operation piece part 44 but to transmit rotational movement of the operation piece part 44 to each engagement piece part 39.

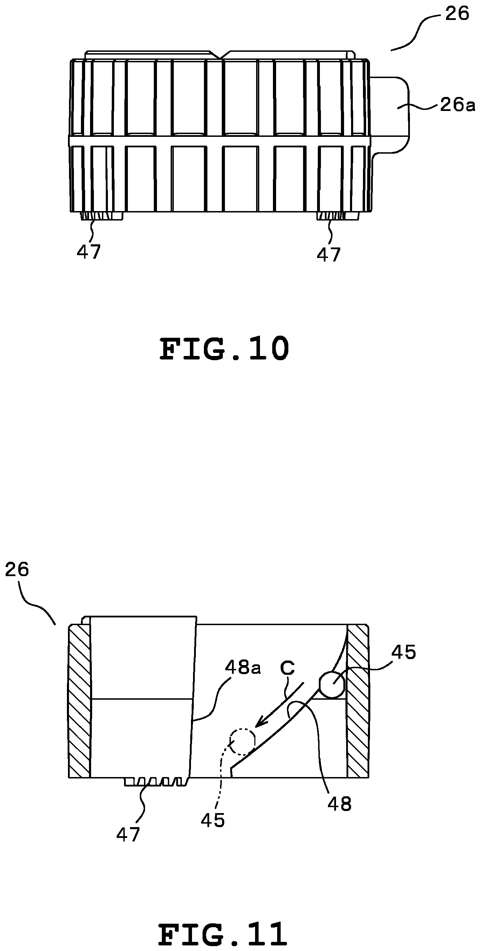

As shown in FIG. 10 and FIG. 11, the operation member 26 is made of a plastic material such as POM resin and formed into a thin cylindrical shape in such a size that the operation member 26 is placed on the flange part 31 engaged with the outer circumferential wall of the arcuate walls 30 and 30 of the top end part of the housing 22. An anti-slip concavo-convex part extending in the vertical direction is formed over the entire outer circumferential surface of the operation member 26 and a plurality of ribs 26a for the user to hook them with a finger to perform a rotation operation are integrally provided at one location in the circumferential direction so as to protrude in the outer circumferential direction.

The operation member 26 rotatably engages with the outer circumference of the top end part of the housing 22, and a tooth part 47 that engages with the first ratchet part 31a or the second ratchet part 31b when the tooth part 47 comes to just on either ratchet is integrally provided on the lower end face part of the operation member 26. In this case, when the tooth part 47 engages with the first ratchet part 31a, the operation member 26 is thereby held at the first position, and when the tooth part 47 engages with the second ratchet part 31b, the operation member 26 is thereby held at the second position. Therefore, a locking mechanism is formed of the tooth part 47 and the second ratchet part 31b.

The cam parts 48 are formed on the inner circumferential surface of the operation member 26 at left and right positions to operate the transmission member 24. This cam part 48 is provided so that the protrusion part 45 of the transmission member 24 is placed on the top surface and is formed into a sloped shape so that the top surface becomes lower as it goes in the counterclockwise direction (left side in FIG. 11). The protrusion part 45 relatively moves along the cam part 48 and its further descent is prevented by two ribs 22c (only one is shown in FIG. 5 and FIG. 4) provided in the housing 22. As shown in FIG. 5, the ribs 22c are disposed at lower sides of the side openings 22b and 22b respectively. A stopper wall 48a is also provided on the inner circumferential surface of the operation member 26.

The operation member 26 is provided so as to be rotatable around the outer circumference of the top end part of the housing 22 with some backlash in the vertical direction by being sandwiched between the cap 28 and the flange part 31 from above and from below. In this case, a ring-shaped wave spring 27 is disposed between the top end face of the operation member 26 and the cap 28 and the operation member 26 thereby always receives a pressure downward, that is, in a direction in which the tooth part 47 engages with the ratchet parts 31a and 31b.

As shown in FIG. 4 and FIG. 5, the cap 28 is made of a plastic material such as ABS resin and configured into a hollow ring shape in which the undersurface is open, that is, the top end parts of a large-diameter outer peripheral wall and a small-diameter inner peripheral wall are integrally connected at the ring-shaped top wall part. In this case, the inner diameter of the cap 28 coincides with the inner diameter of the main body 43 of the transmission member 24 or the cylindrical part 36 of the grasping member 23, and the outside diameter is slightly greater than the outside diameter of the operation member 26. As shown in FIG. 4, a female thread part 49 is formed inside the cap 28, located on the inner circumferential side of the outer peripheral wall to be screwed to the male thread part 30a of the arcuate wall 30 of the housing 22.

A receiving part 28a is provided inside the cap 28 as shown in FIG. 4, located on the inner circumferential side to receive the top end part of the coil spring 25. A ring-shaped concave part 28b in which the wave spring 27 is disposed is provided in the undersurface on the outer circumferential side inside the cap 28. Furthermore, as shown in FIG. 3B and FIG. 5, a hole 50 into which the rivet 29 is inserted is provided in the upper wall of the cap 28. When the rivet 29 is inserted in the hole 50, the cap 28 is fixed to the housing 22 so as to prevent the cap 28 from rotating.

In the pen cartridge 21, the operation member 26 is made rotatable between the first position shown in FIG. 3 or the like and the second position to which the operation member 26 moves rotating in the arrow A direction from there. While the operation member 26 is stopped at the first position, the cam part 48 of the operation member 26 causes the protrusion part 45 of the transmission member 24 to be located at the topmost position of the inclination of the cam part 48 as shown by a solid line in FIG. 11, and the transmission member 24 is in a first state. In the first state, the transmission member 24 is located at the highest position in the vertical direction and also at a predetermined rotation position.

In the first state of the transmission member 24, as shown in FIG. 4, the bottom end part of the tapered surface 46 is in contact with the top end part of the slope 42 of each elastic piece 41 of the second grasping part 38 and each elastic piece 41 is located on the outer circumferential side without elastic deformation. Along with this, in the first state of the transmission member 24, due to the engagement between the operation piece part 44 and the engagement piece part 39, the bottom end part of each elastic deformation claw 40 of the first grasping part 37 is located at the deepest position of the concave part of the cam surface 35 of the housing 22 as shown in FIG. 6 and the elastic deformation claw 40 is located on the outer circumferential side without elastic deformation. Thus, the grasping member 23 is in a released state without grasping the pen P as shown in FIG. 7.

The user can operate the operation member 26 in the arrow A direction from the first position to make it rotate to the second position. In this case, at the first position of the operation member 26, since the tooth part 47 engages with the first ratchet part 31a, it is possible to cause the operation member 26 to rotate by lifting the operation member 26 upward once against a spring force of the wave spring 27 to thereby release the engagement. After the rotation of the operation member 26 toward the second position, if the force against the spring force of the wave spring 27 is released, the spring force of the wave spring 27 causes the tooth part 47 to engage with the second ratchet part 31b and causes the operation member 26 to be held at the second position.

When the operation member 26 is rotated toward the second position, the protrusion part 45 relatively moves along the cam part 48 in an arrow C direction up to a position indicated by an imaginary line in FIG. 11 and the transmission member 24 descends. After the protrusion part 45 relatively comes into contact with the stopper wall 48a, the protrusion part 45, and the transmission member 24 as well, rotate and move integrally with the operation member 26 in the arrow A direction and the transmission member 24 is placed in a second state.

In the second state, the transmission member 24 descends from the first state and also rotates in the arrow A direction. Thus, the tapered surface 46 descends while sliding over the slope 42 of each elastic piece 41, elastically deforming each elastic piece 41 in an inner diameter direction. Along with this, the engagement between the operation piece part 44 and the engagement piece part 39 causes the grasping member 23 to rotate, and as indicated by the arrow A in FIG. 6, each elastic deformation claw 40 moves along the cam surface 35 and each elastic deformation claw 40 is elastically deformed in the inner diameter direction. Thus, in the grasping member 23, the three elastic deformation claws 40 of the first grasping part 37 are elastically deformed toward the inner diameter side as shown in FIG. 8 and the three elastic pieces 41 of the second grasping part 38 are elastically deformed toward the inner diameter side, and a grasping state in which the pen P is grasped is thereby set.

Therefore, it is possible to cause the pen cartridge 21 to hold the pen P by inserting the pen P into the cylindrical hollow part 22a of the housing 22 at the first position of the operation member 26 and then rotating the operation member 26 at the second position. Note that the user rotates the operation member 26 in a direction opposite to that indicated by the arrow A from the second position to the first position while lifting the operation member 26 using the reverse procedure of the above-described one, whereby the transmission member 24 returns to the first position from the second position and the grasping member 23 returns to the released state. The pen P is thereby released from the grasping state, and can be extracted from the pen cartridge 21.

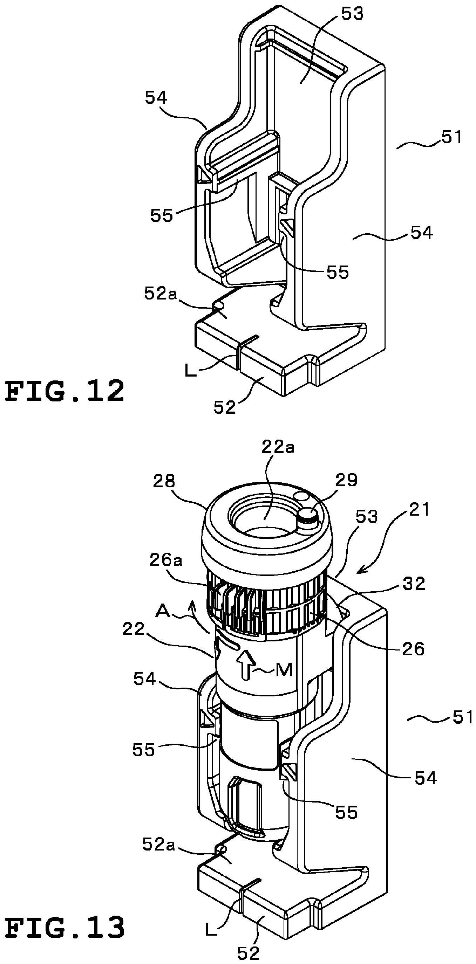

Furthermore, according to the present embodiment, the pen cartridge 21 is provided with a positioning jig 51 for positioning in the axial direction when inserting the pen P into the housing 22. The positioning jig 51 will be described with reference to FIG. 12 to FIG. 14. This positioning jig 51 is made of a plastic material and is integrally constructed of a rectangular plate-shaped base wall part 52, a rear wall part 53 standing upright from the rear side of the base wall part 52, and left and right side wall parts 54 and 54 extending forward from the left and right sides of the rear wall part 53. The top surface of the base wall part 52 constitutes a contact part 52a with which the distal end of the pen P comes into contact and a line L serving as a mark indicating a central position in the left-right direction is provided from the distal end face to the top surface in the distal end side of the base wall part 52.

The left and right side wall parts 54 and 54 of the positioning jig 51 are provided with a mounting part 55 having a shape that corresponds to the constricted part 33 of the housing 22 and the part therebelow as shown in FIG. 14. By inserting the pen cartridge 21 into the mounting part 55 from the front, the housing 22 is held at a predetermined position in the axial direction. The rear surface of the housing 22 of the convex part 32 comes into contact with the front surface of the rear wall part 53. At this time, if the distal end part of the pen P is made to contact the contact part 52a while the pen cartridge 21 is held by the mounting part 55, the distal end part of the pen P is held at an appropriate height position, that is, the length of the distal end part of the pen P protruding from the housing 22 is set to an appropriate length.

The pen P can be attached to the pen cartridge 21 using this positioning jig 51 as follows. As shown in FIG. 13, the pen cartridge 21 is attached to the mounting part 55 of the positioning jig 51. At this time, the operation member 26 is placed at the first position. Next, the pen P is inserted into the cylindrical hollow part 22a of the pen cartridge 21 from above with the distal end thereof placed face down. While keeping the distal end of the pen P in contact with the contact part 52a, the operation member 26 of the pen cartridge 21 is rotated to the second position to cause the pen cartridge 21 to grasp the pen P.

After that, the pen cartridge 21 grasping the pen P is removed forward. Use of the positioning jig 51 allows the pen cartridge 21 to hold the pen P at an appropriate position in the axial direction during an insertion of the pen into the pen cartridge 21 and can easily complete the operation in that case. Note that by comparing the distal end of the pen P with the line L, it is possible to confirm whether or not the pen point of the pen is held at the center without the axis misaligned.

The pen cartridge 21 of the present embodiment can obtain the following operations and effects. That is, by inserting the pen P into the cylindrical hollow part 22a of the housing 22 in a penetrating state and causing the operation member 26 to rotate from the first position to the second position, it is possible to cause the grasping member 23 to transition from a released state to a grasping state. The grasping member 23 includes the first grasping part 37 at the bottom end part as well as the second grasping part 38 at the top end part so that the outer circumference of the pen P is grasped by these grasping parts at two locations in the axial direction. Furthermore, the first grasping part 37 and the second grasping part 38 can be operated simultaneously by a single operation of the operation member 26. Therefore, according to the present embodiment, it is possible to stably hold the pen P by a simple operation using the pen cartridge 21 detachably attached to the cutting plotter 1 while holding the pen P.

According to the present embodiment, the first grasping part 37 is constructed of three elastic deformation claws 40, the cylindrical hollow parts 22a of the housing 22 are provided with three cam surfaces 35 for operating them, the grasping member 23 is caused to rotate and move interlocking with the operation member 26 and the three elastic deformation claws 40 are configured to be elastically deformed in the inner diameter direction by an action of the cam surfaces 35. This makes it possible to construct a mechanism for operating the first grasping part 37 with a relatively simple configuration of providing the cam surfaces 35 in the housing 22. In this case, it is possible to stably and reliably grasp the outer circumference of the pen P with a plurality of (three in this case) elastic deformation claws 40 from three directions.

Furthermore, the present embodiment adopts a configuration in which the second grasping part 38 is constructed of three elastic pieces 41 and the transmission member 24 that operates interlocking with the rotation of the operation member 26 causes the three elastic pieces 41 to elastically deform in the inner diameter direction. This makes it possible to construct a mechanism for operating the second grasping part 38 still in a relatively simple configuration while being different from the first grasping part 37. In this case, the transmission member 24 makes it possible to perform not only the grasping operation of the second grasping part 38 but also the grasping operation of the first grasping part 37, allowing grasping of the pen P to be performed in a much simpler configuration.

Furthermore, the present embodiment adopts a configuration in which the operation member 26 is provided with the tooth part 47, the housing 22 is provided with the first ratchet part 31a and the second ratchet part 31b, and the operation member 26 can be held at the first position and the second position by locking of those parts, and it is thereby possible to prevent an unintentional rotation of the operation member 26 and more reliably perform a rotation operation of the operation member 26. Since the anti-slip parts 40a and 41a are provided in regions of the elastic deformation claws 40 of the first grasping part 37 and the elastic pieces 41 of the second grasping part 38 where these parts come into contact with the pen P, it is unlikely for the grasping parts 37 and 38 to slide over the pen P and it is thereby possible to make it more reliable to grasp the pen P.

Since the first grasping part 37 and the second grasping part 38 are independent of each other, and so they can each hold pens of different diameters. That is, when one pen is used, even if the diameter of the pen differs between the position of the pen grasped by the first grasping part 37 and the position grasped by the second grasping part 38, it is possible to grasp the pen appropriately in accordance with the respective diameters.

Note that the above-described embodiment has described the pen cartridge 21 which can be detachably attached to the carriage 5 of the cutting plotter 1, but it goes without saying that the pen cartridge 21 can also be detachably attached to a pen plotter (X-Y plotter) for drawing or the like. Examples of the pen P to which the above-described embodiment is applicable include not only a felt pen but also writing utensils in general such as a ball-point pen or a mechanical pencil. As the anti-slip parts 40a and 41a, a separate anti-slip member such as thin plate-like rubber may be pasted to them instead of applying embossing thereto.

Moreover, although the above-described embodiment provides two grasping parts in the axial direction, three or more grasping parts may be provided. A configuration with three elastic deformation claws and elastic pieces has been described but a configuration with four or more elastic deformation claws and elastic pieces may be adopted. In addition, shapes and structures or the like of components such as the housing, operation member, grasping member constituting the pen cartridge can be changed in various ways, and the positioning jig 51 need not always be provided and the like. As such, the present disclosure is not limited to the aforementioned embodiment but can be changed and implemented as appropriate without departing from the spirit and scope of range.

In the embodiments described above, a single CPU may perform all of the processes. Nevertheless, the disclosure may not be limited to the specific embodiment thereof, and a plurality of CPUs, a special application specific integrated circuit ("ASIC"), or a combination of a CPU and an ASIC may be used to perform the processes.

The foregoing description and drawings are merely illustrative of the principles of the disclosure and are not to be construed in a limited sense. Various changes and modifications will become apparent to those of ordinary skill in the art. All such changes and modifications are seen to fall within the scope of the disclosure as defined by the appended claims.

## Claims

1. A pen cartridge that holds a pen, configured to be detachably attached to a plotter configured to perform drawing using the pen, the pen cartridge comprising:
a housing comprising a cylindrical hollow part into which the pen is inserted;
an operation member provided on the housing; the operation member configured to rotate between a first position and a second position around a central axis with respect to the housing; the central axis extends in the direction in which the pen is inserted; and
a grasping member provided in the housing and including a plurality of grasping parts configured to grasp an outer circumference of the pen inserted into the housing at a plurality of different locations in an axial direction which is a direction in which the central axis extends,
the plurality of grasping parts configured to transition from a released state to a grasping state when the operation member is rotated from the first position to the second position, the released state being a state in which the pen is not grasped, and the grasping state being a state in which the pen is grasped.

2. The pen cartridge according to claim 1, wherein
the grasping member comprises a first grasping part, as one of the grasping parts, disposed in the cylindrical hollow part of the housing and located on one end side in the axial direction of the grasping member, the grasping parts being elastically deformable in a diameter direction which is a direction crossing the axial direction,
the pen cartridge further comprising,
a cam surface provided in the cylindrical hollow part of the housing, and configured to elastically deform the first grasping part, and
when the operation member is rotated from the first position to the second position, the grasping member rotates and moves interlocking with the operation member, and the cam surface is configured to cause the first grasping part to elastically deform in an inner diameter direction and grasp the pen.

3. The pen cartridge according to claim 2, wherein
the first grasping part comprises a plurality of elastic deformation claws configured to grasp the pen, and provided at an interval in a circumferential direction, the cam surface is provided in plurality so as to correspond to each of the elastic deformation claws.

4. The pen cartridge according to claim 3, wherein
the first grasping part comprises at least three elastic deformation claws.

5. The pen cartridge according to any one of claims 2 to 4, wherein
the grasping member comprises a second grasping part, as one of the grasping parts, located on the other end side of the grasping member in the axial direction,
the pen cartridge further comprising,
a transmission member is provided in the cylindrical hollow part of the housing, configured to be movable in the axial direction between a first state and a second state, the first state being a state in which the transmission member does not engage with the second grasping part, and the second state being a state in which the transmission member engages with the second grasping part and causes the second grasping part to elastically deform in an inner diameter direction, and
when the operation member is rotated from the first position to the second position, the transmission member is configured to move from the first state to the second state, cause the second grasping part to elastically deform in the inner diameter direction and grasp the pen.

6. The pen cartridge according to claim 5, wherein
the transmission member is configured to cause the grasping member to rotate and move together when the operation member is rotated from the first position to the second position.

7. The pen cartridge according to any one of claims 1 to 6, wherein
the housing comprises a locking mechanism configured to hold the operation member at the second position.

8. The pen cartridge according to any one of claims 1 to 7, wherein
the grasping part comprises an anti-slip part in a region contacting the pen.

9. The pen cartridge according to any one of claims 1 to 8, further comprising a positioning jig including an attaching part configured to hold the housing at a predetermined position in the axial direction and a contact part configured to come into contact with a distal end of the pen inserted into the housing which held by the attaching part.
